# EUROPEAN PATENT APPLICATION

(11) **EP 1 109 391 A2**
(43) Date of publication of application: **20.06.2001**
(21) Application number: 00650176.1
(22) Date of filing: 01.11.2000
(51) Int. Cl.: H04M 3/533

(54) **Voice messaging system**

(30) Priority: 14.12.1999 US 461184
(71) Applicant: Nortel Networks Limited, Montreal, Quebec H2Y 3Y4 (CA)
(72) Inventor: Williams, Jeff N., Toronto, Ontario M4G 1E8 (CA); Myers, John C., Toronto, Ontario M5E 1T4 (CA); Fowler, Peter J., Mississauga, Ontario L5H 4E1 (CA)
(74) Representative: Brophy, David

(57) **Abstract**

A distributed Voice Messaging System (DVMS) is disclosed. The DVMS may be deployed by organizations having small branch offices for which a conventional PBX and VMS would be prohibitively costly or have too large a capacity. Accordingly, a Message Taker (MT) system is disclosed which communicates with a conventional PBX or key system at a branch office. The MTS is also in communication with a modified conventional central VMS through a data network such as the internet. For each branch subscriber to the messaging services of the central VMS, a voice mailbox (VMB) is provisioned at the central VMS and with their local MTS. Greetings are recorded by the branch subscriber with the central VMS in the conventional manner. These greetings are then "pushed" or transmitted, over the data network, to the branch subscriber's VMB provisioned on the MTS. Callers to the branch subscriber receiving no answer or a busy signal are forwarded to the MTS which plays the subscriber's greeting and temporarily stores the caller's recorded message. Messages received by the MTS are transmitted to the VMS over the data network, using perhaps the VPIM protocol, and deleted from the MTS's memory. Messages are retrieved by all subscribers by contacting the VMS conventional.

## Description

### FIELD OF THE INVENTION

The invention relates to a system for voice messages. More particularly, a distributed system for storing, retrieving and providing voice messaging services is disclosed.

### BACKGROUND TO THE INVENTION

The speed at which voice messaging systems have been adopted has been phenomenal. As recently as ten years ago voice messaging systems and services where relatively obscure and available to only the largest of companies. However, today, voice messaging is a service that individuals expect to have and use when a called party is unavailable.

As those skilled in the art are aware, voice messaging servers (VMS) provide to users, through interactive menus, the ability to store greetings for playback, send voice messages, have messages recorded and stored, and retrieve those recorded and stored messages and greetings.

In a conventional enterprise system, the VMS is in communication with a Private Branch Exchange (PBX) or key system. Users or subscribers, upon dialling a specific number, are connected to the VMS. The user is then prompted through an interactive system (typically through DTMF sequences) to access the services provided by the VMS.

In a large or distributed enterprise, that is one with several locations, the voice messaging system typically comprises a local PBX at each location. Each PBX communicates with the central PBX and voice messaging system using dedicated physical facilities. In this configuration, the voice messaging system is centrally managed at the headquarters of the enterprise. The benefits of central management is that the same services are offered to each user that is a member or subscriber of the voice messaging system. Moreover, a centrally managed system typically provides enterprise-wide services that are transparent to the user. For example, a centrally managed system may allow a first subscriber to send a second subscriber, who may be geographically distant from the first, a voice message as if the two subscribers were at the same location. Central management of a voice messaging system also enables efficient administration, maintenance and upgrade of the voice messaging system. Alternatively, for an enterprise with several large sites, each site may have a local (and locally managed) PBX and VMS. However, a locally managed system typically requires more maintenance, more administration and is more expensive to maintain. Accordingly, a centrally managed system is, in most instances, most desirable.

Conventionally, centrally managed systems require each local PBX to be in communication with a central VMS (typically located at the enterprise's headquarters) via a dedicated trunk connection such as an ISDN Primary Rate Interface (PRI) service. An example of this conventional system is the Nortel™ Meridian™ system. Accordingly, conventional systems require a central site to have a VMS and PBX and each other location to have a PBX or key system. Each branch site subscriber to the VMS then communicates with the central VMS using the dedicated connections. For large enterprises with many smaller branches (such as, for example, a bank with many branches) this architecture is very expensive to implement.

Accordingly, a cost-effective system for providing voice messaging services that is centrally managed and deployable at many locations is desired.

### SUMMARY OF THE INVENTION

A central VMS in communication with a conventional PBX and, via a data network, with a Message Taker server (MTS) - a client to the central VMS - deployed at each physical site (i.e., branch office). The data network may be the Internet, an intranet or Wide Area Network (WAN). Each MTS is, also, in communication, with the local telephone system, such as a PBX or key system. Each user of the VMS, regardless of their location (i.e., located at the central or branch office), is provisioned with a voice mailbox (VMB) in a conventional fashion on the central VMS. The voice mailbox on the central VMS of subscribers physically located at a branch offices (hereinafter "branch subscribers") is additionally provisioned with an identifier (such as, for example, a name corresponding to the local MTS and/or a network identifier, such as an Internet Protocol (IP) address of their local MTS). A corresponding VMB is also provisioned for the branch subscriber at the branch subscriber's local MTS. The branch subscriber records their outgoing message(s) or greeting(s) in a conventional fashion with the central VMS. These greetings are then transmitted and stored on the branch subscriber's VMB provisioned on the branch subscriber's local MTS. When a caller calls the telephone of a voice messaging system branch subscriber and receives a Call Forward Busy (CFB) or Call Forward No Answer (CFNA), the branch PBX or key system forwards the caller to the MTS. The MTS responds by playing back the appropriate greeting from the branch subscriber's VMB. The caller is then presented with the conventional list of options (i.e., record a message, listen to their message, etc.). This incoming message is recorded and, temporarily, stored locally by the MTS. When the session between the caller and the MTS terminates, the recorded message is transmitted by the MTS to the central VMS over the data network (e.g., internet). The recorded message may be transmitted using the Voice Profile for Internet Mail (VPIM) protocol. Upon receipt of the recorded message, the central VMS stores the message in the user's VMB provisioned on the central VMS. The VMS then indicates to the branch subscriber's MTS, by transmission of a message over the data network, that the message has been properly stored. In response, the subscriber's local MTS deletes the local copy of the recorded message and sends a message to the local PBX or key system to indicate that the branch subscriber has a message. This indication is typically generated by a Message Waiting Indicator (MWI) such as a MWI flashing light or by an intermittent dial tone. A branch subscriber accesses their mailbox in the conventional manner by communicating with the central VMS. Accordingly, an enterprise is advantageously able to leverage their investment in their voice messaging system and in their WAN, internet or intranet networks, provide consistent voice messaging services enterprise-wide and centrally manage their voice messaging system on a cost-effective basis through the distributed voice messaging system disclosed herein.

In one aspect of the present invention there is provided a voice messaging system comprising: a voice messaging server in communication with a data network and a telephone switch; a message taking server also in communication with said data network; said voice messaging server adapted to: store greetings of subscribers; store messages for said subscribers; transmit said greetings to said message taking server through said data network; receive messages, from said message taking server transmitted over said data network, said messages intended for said subscribers; said message taking server adapted to: receive greetings transmitted over said data network by said voice messaging server; store said received greetings; play said stored greetings on demand by callers; receive from said callers messages intended for said subscribers; and transmit said messages received from said callers to said voice messaging server over said data network.

In another aspect of the present invention there is provided a method providing voice messaging services, said method comprising: provisioning a subscriber with a voice mailbox on a voice messaging server; provisioning said subscriber with a corresponding voice mailbox on a client of said voice messaging server; storing a greeting for said subscriber in said subscriber's voice mailbox on said voice messaging server; transmitting said subscriber's greeting to said client over a data network; receiving and storing at said client said subscriber's greeting in said subscriber's corresponding voice mailbox; receiving messages for said subscriber at said client; transmitting said received messages for said subscriber from said client to said voice messaging server over said data network; and receiving and storing said received messages for said subscriber in said subscriber's voice mailbox at said voice messaging server.

In another aspect of the present invention there is provided a message taking server (MTS) comprising: an interface configured for connecting with a data network; an interface configured for connecting to a telephone switch; a memory; a processor adapted to: receive a voice mail call from said telephone switch in respect of-a subscriber; store in said memory any message received for said subscriber in respect of said voice mail call; transmit said message along with an identification of said subscriber to said data network addressed to a voice mail server (VMS); receive an acknowledgement from said VMS of receipt of said message for said subscriber and, in response, delete said message from said memory and set a message wait indicator for said subscriber.

In another aspect of the present invention there is provided a voice messaging server (VMS), comprising: an interface configured for connecting with a data network; an interface configured for connecting to a telephone switch; a memory; a processor adapted to: receive a voice mail message along with an identification of a subscriber on said data network transmitted from a message taking server (MTS); store in said memory a message received for said subscriber in respect of said voice mail call; transmit on said data network an acknowledgement to said MTS on receipt and storage of said message for said subscriber.

In another aspect of the present invention there is provided a method for providing voice mail services, comprising: receiving a voice mail call in respect of a subscriber; storing a message received for said subscriber in respect of said voice mail call; transmitting said message along with an identification of said subscriber to a data network addressed to a voice mail server (VMS); receiving an acknowledgement from said VMS of receipt of said message for said subscriber and, in response, deleting said message and setting a message wait indicator for said subscriber.

In another aspect of the present invention there is provided a method for providing voice mail services, comprising: storing a greeting for a subscriber in a voice mailbox (VMB) provisioned for said subscriber; transmitting said greeting along with an identification of said subscriber to a data network address of a Message Taker Server (MTS); receiving a message along with an identification of said subscriber from said data network; transmitting an acknowledgement from said VMS of receipt of said message for said subscriber on said data network to said MTS.

In another aspect of the present invention there is provided a computer software medium comprising computer code to adapt a computer to: receive a voice mail message along with an identification of a subscriber from a data network transmitted from a message taking server (MTS); store in memory of said computer said message received for a subscriber; and transmit on said data network an acknowledgement to said MTS on receipt and storage of said message for said subscriber.

In another aspect of the present invention there is provided a computer software medium comprising computer code to adapt a computer to: receive a voice mail call from a telephone switch in respect of a subscriber, said telephone switch in communication with said computer; store in memory of said computer any message received for said subscriber in respect of said voice mail call; transmit said message along with an identification of said subscriber to a data network addressed to a voice mail server (VMS), said computer in communication with said data network; and receive an acknowledgement from said VMS of receipt of said message for said subscriber and, in response, delete said message from said memory and set a message wait indicator for said subscriber.

Other aspects and features of the present invention will become apparent to those ordinarily skilled in the art upon review of the following description of specific embodiments of the invention in conjunction with the accompanying figures.

### BRIEF DESCRIPTION OF THE DRAWINGS

The present invention will be more clearly understood after reference to the following detailed specification read in conjunction with the drawings wherein:
Figure 1 is a schematic of a conventional voice messaging system;
Figure 2 is a schematic of a voice messaging system embodying one aspect of the present invention;
Figure 3 is a detailed schematic of a first portion of Figure 2;
Figure 4 is a detailed schematic of a portion of Figure 3;
Figure 5 is a detailed schematic of a portion of Figure 4;
Figure 6 is a detailed schematic of a portion of Figure 5;
Figure 7 is a detailed schematic of a second portion of Figure 2;
Figure 8 is a detailed schematic of a portion of Figure 7;
Figure 9 is a detailed schematic of a portion of Figure 8;
Figure 10 is a detailed schematic of a portion of Figure 9; and
Figures 11, 12 and 13 are flow charts illustrating the operations of embodiment of Figure 2.

### DETAILED DESCRIPTION OF THE PREFERRED EMBODIMENTS

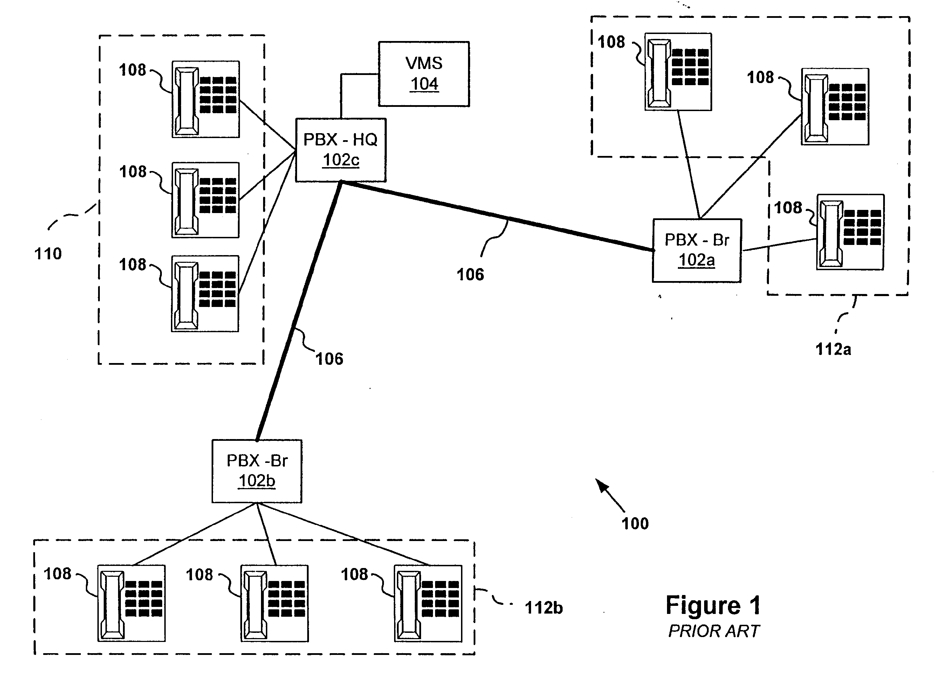

A conventional voice messaging network 100 is illustrated in Figure 1. Conventional network 100 has a conventional central PBX-HQ 102c, located at the headquarters 110 of an enterprise. PBX-HQ 102c is in communication with a plurality of telephone handsets 108. Also in communication with conventional PBX-HQ 102c is conventional central Voice Messaging Server (VMS) 104. PBX-HQ 102c communicates, via PRIs 106, with branch PBX 102a and 102b (collectively PBX-Br 102) located at branch offices 112a and 112b, respectively. As is known to those skilled in the art, PRIs may be, for example, a T1 or E1 trunk. Each branch PBX-Br is conventionally in communication with telephone handsets 108 and a branch office VMS 104.

A subscriber to VMS 104 of voice messaging network 100 would contact, through their local PBX, such as PBX-HQ 102c or PBX-Br 102, VMS 104 to record greetings and send or retrieve messages. A user calling a subscriber, such as a subscriber to at branch 112a, upon receiving a CFNA or CFB, would be connected to VMS 104 through the use of PRI 106. Upon connection to VMS 104 the user would typically have the subscriber's greeting played and would leave a voice message. The subscriber's greeting and the recorded message would be stored locally at VMS 104.

Administration of voice messaging network 100 would be performed through VMS 104. That is, an administrator of network 100 can modify, update or otherwise maintain network 100 centrally through VMS 104.

As will be apparent to those skilled in the art, the cost of installing network 100, including deploying the requisite PRI connections 106 between each PBX 104 and PBX-HQ 102c, is prohibitively expensive when branch offices 112 do not have a sufficiently large number of subscribers to economically justify this type of installation.

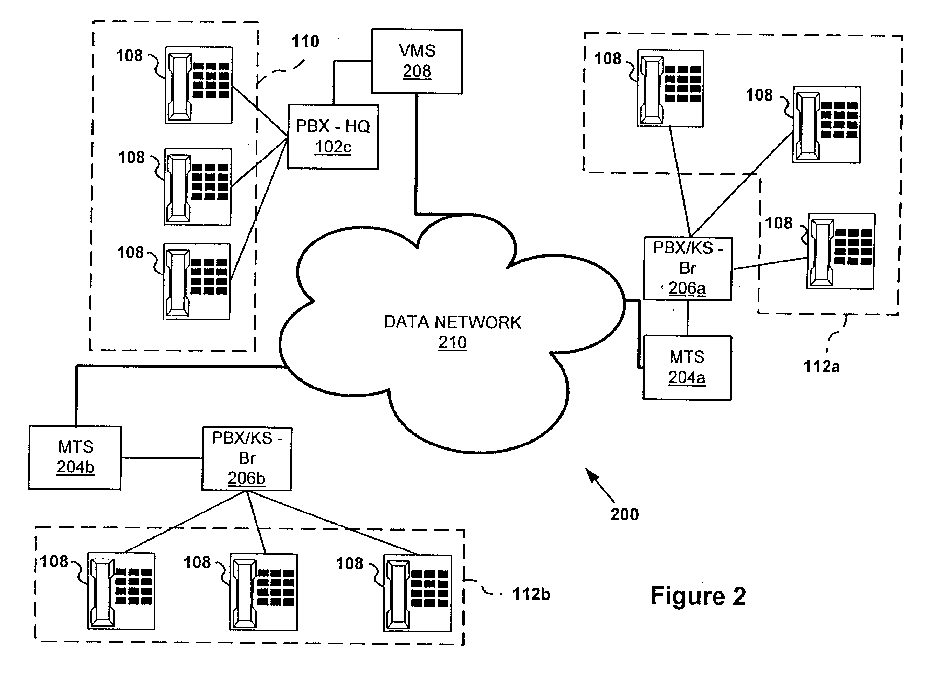

Accordingly, distributed voice messaging system (DVMS) 200, an exemplary embodiment of which is illustrated in Figure 2, has been developed. Similar to a conventional voice message network 100 (Figure 1), DVMS 200 has a central and conventional PBX-HQ 102c located, typically, at the headquarters 110 of the enterprise. PBX-HQ 102c may be, for example, a Nortel™ Meridian™ M1 PBX or other suitable private branch exchange or key system device. As before, PBX-HQ 102c is in conventional communication with a plurality of telephone handsets 108. Also in communication with PBX-HQ 102c is VMS 208. As is described below, VMS 208 may be implemented through modifications to a conventional VMS such as, for example, the Nortel™ CallPilot™ voice messaging server. VMS 208 operates as server in DVMS 200.

VMS 208 is, in turn, connected to data network 210. Data network 210 may be implemented using any suitable networking protocol and over suitable networking physical facilities. For example, data network may be an Internet Protocol (IP) network, such as the Internet or an intranet, or Wide Area Network (WAN) wherein data packets may be transmitted over optical fibres, coaxial cable, etc. Alternatively, data network 210 may be an Asynchronous Transfer Mode (ATM) network with Private Virtual Channels connecting branch office Message Taker systems 204 to VMS 208. However, it may be preferable to implement data network 210 using a packet switched network in order to reduce network administration and costs.

Branch offices 112a and 112b each comprise a conventional branch PBX or key system (KS) 206a and 206b, respectively (collectively PBX/KS-Br 206). However, PBX/KS-Br 206 will be suitably scaled to the reflect the smaller scale of the branch operations compared to that of headquarters 110. Accordingly, PBX/KS-Br 206 may be, for example, a Nortel™ Norstar™ Integrated Communications System, or other suitable key system. In comparison, PBX-HQ 102c, which may be a Nortel™ Meridian™ system, serves a larger base than PBX/KS-Br 206. For example, a Meridian™ system can be scaled to service upwards of 60,000 persons while, in contrast, the Nortel™ Norstar™ system can be scaled to service upwards 272 ports in various combinations of incoming lines and extensions.

As in the conventional network 100 (Figure 1), each branch office 112 will have a plurality of telephone handsets 108 in communication with a branch communications system which, in the case of DVMS 200 is a PBX/KS-Br 206. However, unlike conventional network 100 (Figure 1), in DVMS 200 each PBX/KS-Br 206 communicates with an MTS 204. Each MTS 204 is in communication with VMS 208 at headquarters 110 via data network 210. Each MTS 204 operates as a client of VMS 208 in DVMS 200. MTS 204 is akin to a "stripped" version of VMS 208.

In overview, and without limiting the foregoing and subsequent descriptions herein, DVMS 200 operates as follows. Each subscriber, whether situated at headquarters 110 or in a branch location 112, is provisioned with a conventional voice mailbox on VMS 208. VMS 208 records and stores greetings and messages for each of the subscribers to VMS 208. Each voice mailbox (hereinafter VMB) on VMS 208 in addition to the conventional identifiers (i.e., name of subscriber, subscriber's extension or phone number, password, etc.) is also provisioned with information indicating whether the subscriber is local (i.e., situated at headquarters 110) or located at a branch office 112. In the latter case, the VMB is provisioned with data network address information of the subscriber's local MTS 204 (i.e., a Media Access Control (MAC), IP or other data networking address uniquely identifying the MTS 204 forming part of data network 210). A similar VMB will be provisioned automatically by VMS 208 at MTS 204. To provision a subscriber's VMB at MTS 204, VMS 208 will transmit a message over data network 210 to MTS 204. This message will include identification information for provisioning the VMB at MTS 204 and address information (such as, for example, a MAC or IP address) of VMS 208.

A branch or headquarter subscriber may record greetings and passwords by contacting VMS 208 via a telephone, such as, for example, telephone handset 108. However, if the subscriber is a branch subscriber, their greetings will be "pushed" or transmitted to MTS 204 at their local branch office 112 over data network 210 using the additional information associated with the branch subscriber's VMB and stored in the VMB provisioned for the subscriber at MTS 204. The transmittal of these greetings may be through use of the Voice Profile for Internet Mail (VPIM) standard (as described in RFC 1911 and RFC 2421, the contents of which are hereby incorporated herein). Upon receipt of the branch subscriber's greetings, MTS 206 will store the message locally (i.e., at branch office 112).

A caller calling either a local or headquarter based subscriber and receiving a CFNA or CFB will be presented with the usual greetings and options by MTS 206 or VMS 208, respectively. Upon recordal of a message for a branch subscriber, MTS 204 will temporarily store the recorded message and transmit a copy, again using perhaps the VPIM standard, to VMS 208 for storage in the central VMB of the subscriber called. Upon receipt and storage of the received message, VMS 208 transmits a message, over data network 210, to MTS 204 to delete the copy of the message temporarily stored at MTS 204 and to turn on the message waiting indicator (MWI), which may be, for example, a MWI light or MWI dial tone.

A subscriber wishing to retrieve messages or access the services of DVMS 200, will contact and communicate with VMS 208. If all new messages are accessed by a branch subscriber, VMS 208 will transmit a message to MTS 204 to toggle the MWI from on to off.

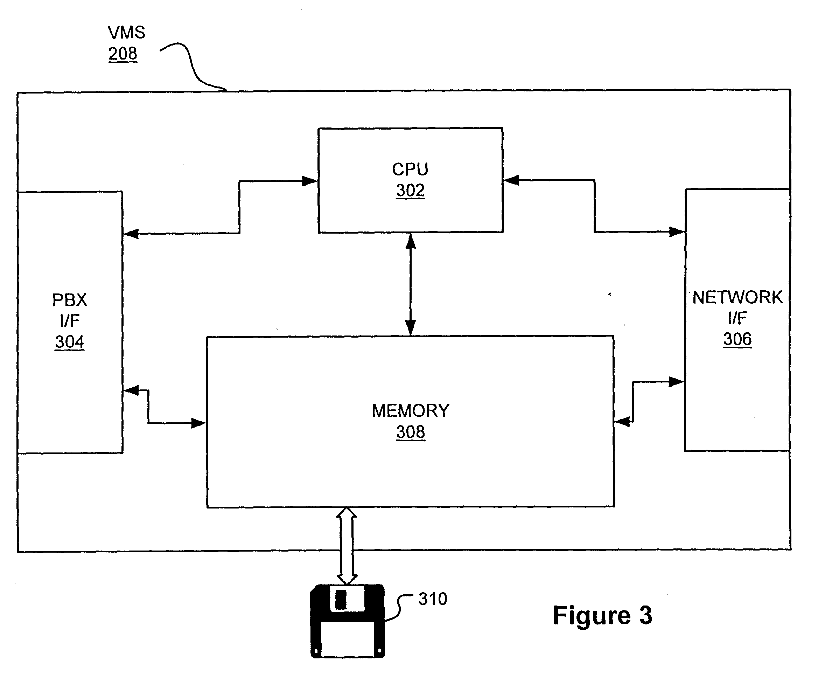

Referencing Figure 3, an exemplary detailed schematic of an embodiment of VMS 208 is illustrated. VMS 208 comprises a conventional Central Processing Unit (CPU) 302 which may be, for example, a Reduced Instruction Set Computer (RISC) such as a Sun™ Microsystems Ultrasparc™, and IBM™ RS/6000 or other suitable processor such as the Motorola™ PowerPC™ or an Intel™ Pentium™ class of processors (including compatible processors from AMD™ and Cyrix™). In communication with CPU 302, are conventional PBX Interface 304 and Network Interface 306. Network I/F 306 may be for example a conventional Ethernet Network Interface Card (NIC), a modem (or bank of modems) or other suitable interface for communicating with data network 210. PBX I/F 304 provides for communication between VMS 208 and PBX-HQ 102c. Memory 308 providing storage for instruction and data, is in communication with CPU 302 and interfaces 304, 306 and may comprise volatile and non-volatile and fixed and removable media. For example, memory 308 may comprise a combination of fixed hard disc drives, removable disc drives, magneto-optical discs, Random Access Memory (RAM) and Read Only Memory (ROM). VMS 208 is also capable of reading removable media 310 which may be a diskette, CD-ROM or other method of transferring data to memory 308 of VMS 208.

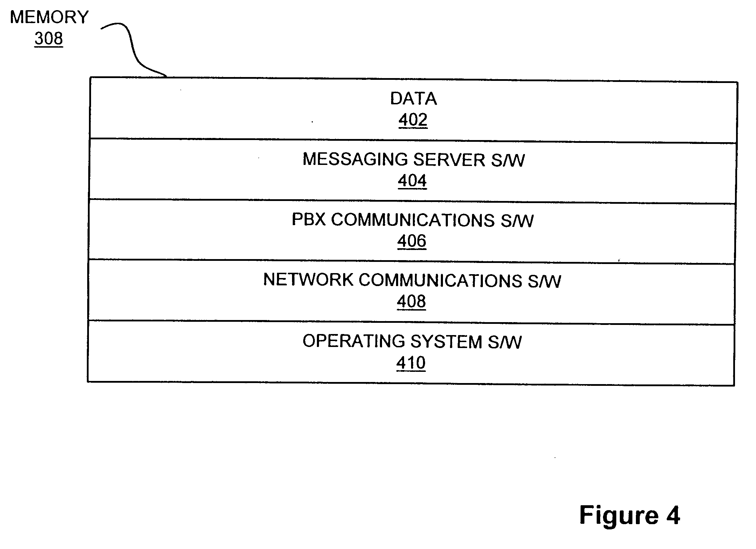

Memory 308 comprises and stores (as illustrated in Figure 4) messaging server software 404, PBX communication software 406, network communications software 408 and operating system software 410, all of which may be downloaded from removable media 310. Additionally, memory 308 stores data 402. As will be appreciated by persons skilled in the art, the delineation between these portions of memory 308 is arbitrary with the functions and operations of the individual portions described herein suitable for performance by other portions of memory 308. Data 402 includes storage for buffers or temporary storage areas, VMBs, administration routines, etc. Messaging server software 404 is the voice messaging software and may be implemented, for example, by Nortel™ CallPilot™ or other suitable VMS software. Messaging server software 404 includes the necessary database, access and retrieval functionality of DVMS 200 (Figure 2) including Interactive Voice Response (IVR) software. PBX communications software 406 provides the necessary protocols and transceiver functions for encapsulating, transmitting, receiving and de-encapsulating data necessary for the communication between PBX-HQ 102c and VMS 208. Network communications software 408 includes the necessary protocols and transceiver functionality for allowing VMS 208 to communicate with data network 210 (Figure 2). The protocols which may be supported by network communications software 408 include TCP/IP, IPX, ethernet, ATM, SLIP, PPP protocols. Additionally, VPIM, described generally hereinafter, may be also be supported by network communications software 408. Operating system 410 provides operating control of VMS 208 and may be implemented by: a UNIX operating system such as, for example, LINUX, AIX™, Solaris™; Windows NT™; or by other suitable, and preferably multitasking operating system.

VPIM provides a standard high-quality digital protocol to connect (typically non-standard) computers which have evolved to provide voice messaging services. VPIM supplants the traditional analog networking protocols based on DTMF signalling and analog voice playback. VPIM is a profile of the internet standard MIME and ESTMP protocols for use as a digital messaging networking protocol.

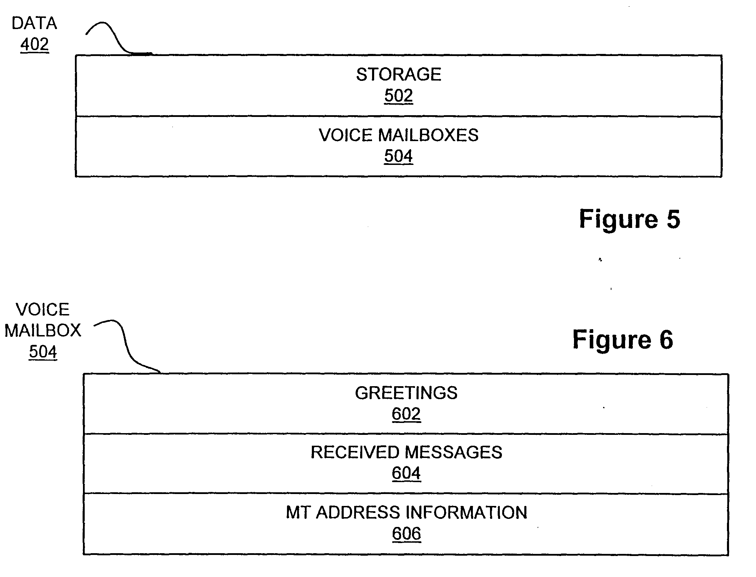

An exemplary schematic of data 402 portion of memory 308 is illustrated in Figure 5. Data 408 comprises general storage area for the various miscellaneous items such as indices, buffers and other matters and VMBs 504. Each VMB 504 is comprised of recorded greetings 602 (Figure 6), received messages 604 and MT address information 606. Recorded greetings 602 and received message 604, as is known in the art, may be stored in any conventional matter preferably in a compressed format thus reducing the necessary size of memory 308 (Figure 3).

Message Taker (MT) address information 606 comprises an indication of whether the subscriber/owner of the associated VMB is a branch or headquarter situated subscriber (i.e., the subscriber's "home" location). This may implemented, for example, through a single stored bit of information. For branch subscribers, MT address information also includes a network address for the MTS 204 which forms part of the branch office for the subscriber. This network address may include, for example, a MAC or IP address of the network card connecting MTS 204 to data network 210.

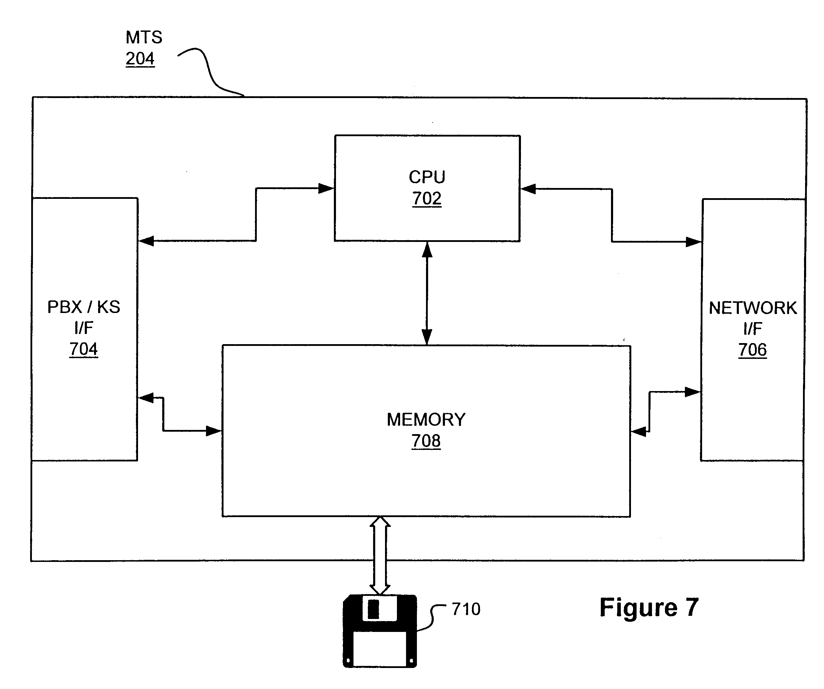

MTS 204 is configured similar to VMS 208 and an exemplary schematic is illustrated in Figure 7. Turning to Figure 7, MTS 204 comprises a CPU 702 in communication with PBX/KS Interface 704, network interface 706 and memory 708. Memory 708 is also in communication with PBX/KS I/F 605 and network I/F 706. As with VMS 208, CPU 702 may be, for example, a RISC processor or an Intel™ Pentium™ compatible processor. PBX/KS I/F 704 provides for the communication facilities to transmit and receive data from PBX/KS-Br 206 with which MTS 204 is in communication (Figure 2). Accordingly, PBX/KS I/F 704 provides the necessary transceiver functions for encapsulating, transmitting, receiving and de-encapsulating data necessary for the communication between PBX/KS-Br 206 102c and MTS 204. As with VMS 208, network I/F 706 may be a conventional network interface card for providing for communication between MTS 204 and data network 210 (Figure 2). MTS 204 is also capable of reading removable media 710 which may be a diskette, CD-ROM or other method of transferring data to memory 708 of VMS 204.

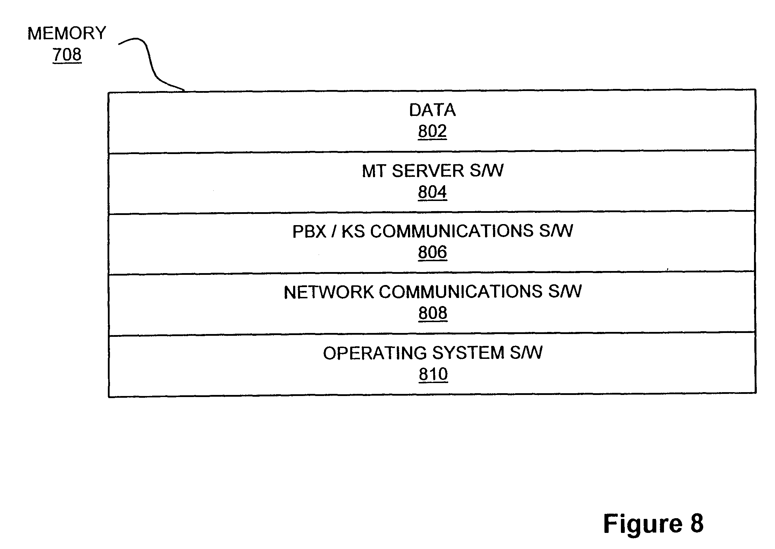

Similar to memory 408 (Figure 4) and referencing Figure 8, memory 708 of MTS 204 also incorporates network communications software 808 and operating system software 810. Additionally, memory 708 of MTS 204 includes PBX/KS communications software 806 and MTS server software 804. All of this software may be loaded from removable media 710. Additionally, memory 708 stores data portion 802. Network communications software 808 provides the facilities for transmitting and receiving data over data network 210 (Figure 2) through network I/F 706 (Figure 7). Operating system software 810 provides general system level control functions of MTS 204 and, like operating system 410 (Figure 4), is preferably a multitasking operating system such as UNIX, Windows NT or other operating system suitable for performing the functions and operations described herein. PBX/KS communications software 806 provides the necessary communications software for MTS 204 to communicate with VMS 208 via PBX/KS I/F 704.

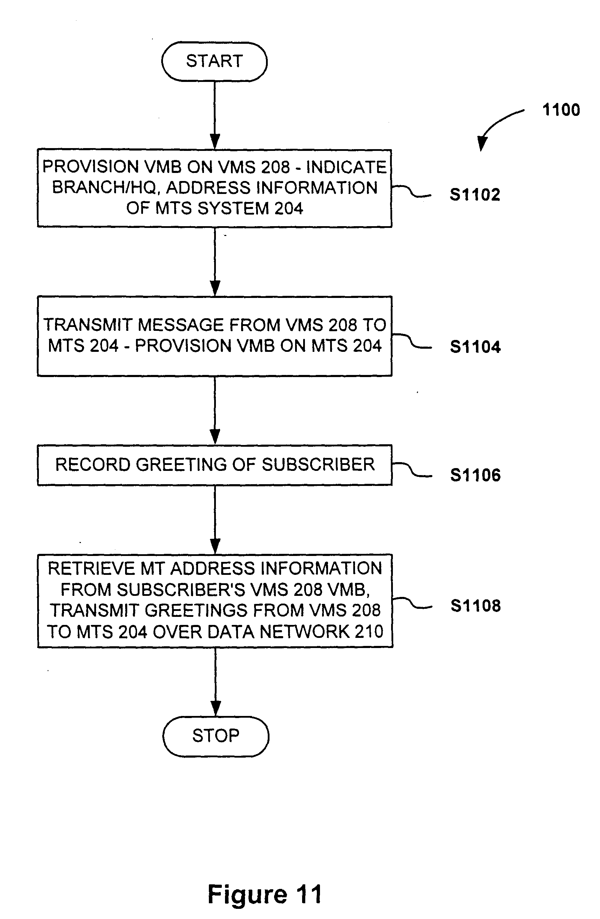

MTS server software 804 (Figure 8) in co-operation with messaging server software 404 (Figure 4) provides the facilities to carry out operations 1100, 1200 and 1300 (Figures 11, 12 and 13) described below.

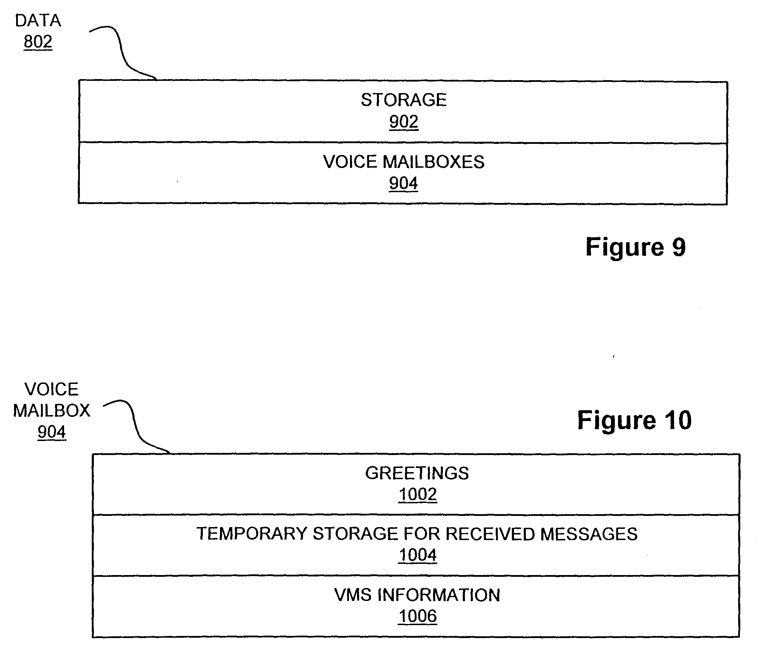

Data 802 in addition to providing general storage area 902 (Figure 9) for the instructions and operations of MTS 204 (Figure 2) also includes memory for VMBs 904. Each VMB comprises stored greetings 1002 (Figure 10), temporary storage area 1004 for temporarily storing received messages and VMS information area 1006. VMS information 1006 provides the network address information (e.g., a MAC or IP address) for transmitting communications to VMS 208 (Figure 2) over data network 210.

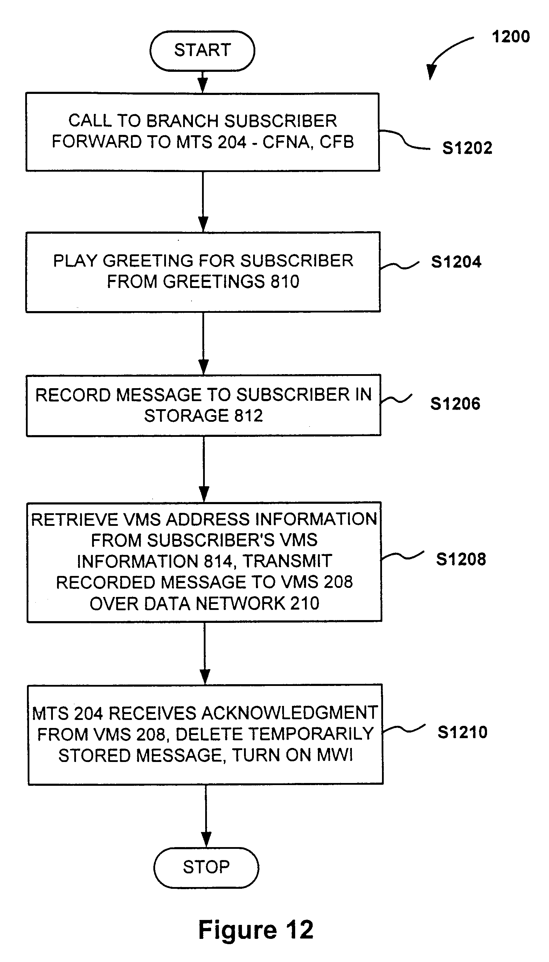

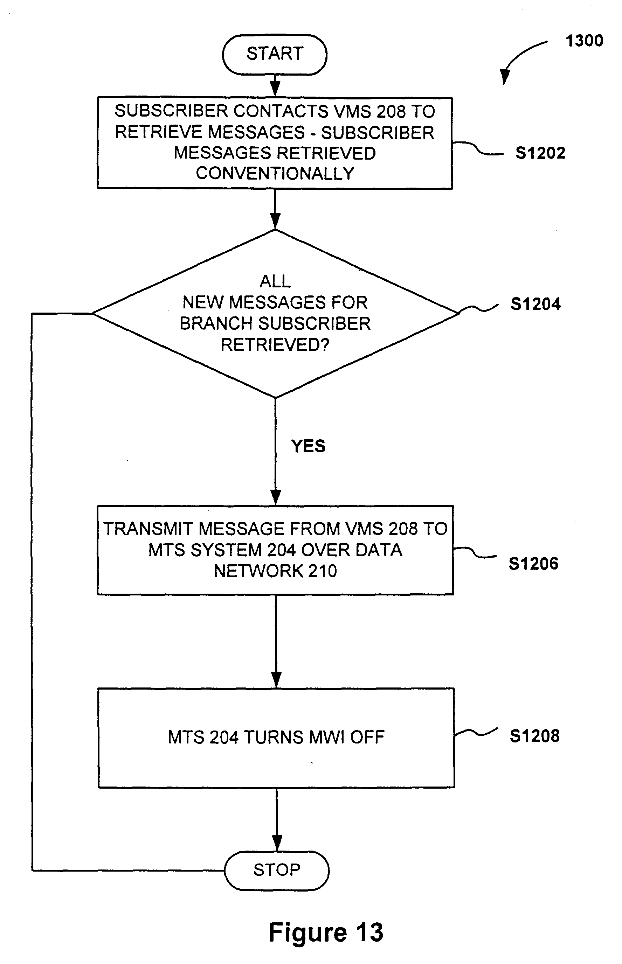

Referencing Figures 2-10 and focussing on Figures 11, 12 and 13, VMS 208 and MTS 204 perform operations 1100 (Figure 11), 1200 (Figure 12) and 1300 (Figure 13) to provide the functionality of DVMS 200 (Figure 2). A subscriber is provisioned with a VMB on VMS 208 by messaging server software 404 (S1102). The VMB of the user is stored in the data 402 portion of memory 308 and, more specifically, as a voice mailbox 504. The subscriber's VMB will, through operation of messaging server software 404, record a greeting (or greetings) which will be stored in greetings data 602. VMS 208 will be provisioned with and store address information which corresponds to the subscriber's local voice message server (which could either be another VMS 208 or an MTS 204) in MT address information 606. The address information of the subscriber's local voice message server will include an indicator, which may be a single bit of data, indicating if the subscriber is situated at headquarters 110 or a branch office 112. If the subscriber is a branch subscriber, VMS 208 will be provisioned with and store a network address of the relevant MTS 204. This network address may be, for example, a MAC address or IP address.

Subscribers situated at headquarters 110 (Figure 2) will access and use VMS 208 in the conventional manner.

For branch subscribers, once a VMB has been provisioned in step S1102 at VMS 208, VMS 208 transmits a message, over data network 210 (Figure 2) through network I/F 306 and in co-operation with network communications software 408, to the relevant MTS 204 (S1104). The message transmitted by VMS 208 to MTS 204 uses the address information stored in MT address information 606 of the subscriber's VMB 504, requesting that a corresponding VMB for the subscriber be provisioned on MTS 204. The transmitted message is received by MTS 204 through network I/F 706 and network communications software 808. Responsive to this received message, MTS 204, through operation of MTS server software 804, allocates the branch subscriber a VMB as VMB data 904 in memory 708. The required network address information of VMS 208 will be stored in VMS information data 1006. As will be appreciated by those skilled in the art, steps S1104 and S1102 may be reversed. That is, a VMB may be provisioned first on MTS 204. Responsive to this provisioning, MTS 204 would then transmit a message to VMS 208 over data network 210 to provision a corresponding VMB for the subscriber on VMS 208. In this alternative arrangement, each VMB provisioned for the subscriber would then store the necessary address information in memory areas 606 and 1006.

All subscribers contact VMS 208 to record greeting messages in the conventional fashion. These greetings are stored at VMS 208 by messaging server software 404 in greetings data 602 portion of each subscriber's VMB 602. As will be appreciated by those skilled in the art, steps S1104 and S1106 may be reversed. That is, the provisioning of a first VMB on VMS 208 (S1102) and the recording of a greeting (S1106) (which may be temporarily stored at VMS 208) may occur before the provisioning of a corresponding VMB on MTS 204 (at which time the previously recorded greeting can be transmitted to MTS 204 and stored in the newly provisioned VMB).

For branch subscribers, once a greeting has been recorded and stored on VMS 208, VMS 208 through messaging server software 404 "pushes" or transmits the greeting, perhaps using the VPIM protocol, to MTS 204 over data network 210 (S1108). Once received by MTS 204 (through operation of MTS server software 804) the greeting is stored in the greetings data 1002 portion of memory 708 allocated for this use.

As will be appreciated steps S1106 and S1108 may be repeated whenever the subscriber wishes to alter the greeting received by callers receiving a CFB or CFNA.

Operations 1200 (Figure 12) are performed whenever a message is to be left for a subscriber. When a caller wishing to contact a subscriber to voice messaging system 200 receives a CFNA or CFB, the caller is forwarded from the local PBX or PBX/KS (102c, 206a or 206b) to the local messaging server (either VMS 208 or MTS 204). A caller to a headquarter situated subscriber will be forwarded by PBX-HQ 102c to VMS 208 (through PBX I/F 304) in the conventional manner. A caller to a subscriber of PBX/KS-Br 206, upon receiving CFNA or CFB, will be forwarded by PBX/KS-Br 206 to MTS 204 through PBX/KS I/F 704 (S1202). MTS 204 will retrieve the greeting associated with the subscriber stored in greetings data 1002 of the subscriber's VMB 904 (S1204). The caller may then leave a voice message for the subscriber in a conventional manner. This voice message is stored by MTS server software 804 in the temporary storage area 1004 of the subscriber's VMB 904 (S1206). The connection between the caller and MTS 204 is then, typically, terminated in the conventional manner. Upon storage of a voice message, MTS server software 804 retrieves the VMS address information 1006 from the subscriber's VMB 904 and transmits a copy of the recorded message to VMS 208 over data network 210 using the address information so retrieved (S1208). The recorded message, transmitted through network I/F 706, may be encapsulated for transmission using the VPIM protocol. Upon receipt of the recorded message, VMS 208, through operation of messaging server software 404, stores the message in the received messages data 604 portion of the subscriber's corresponding VMB 504. Messaging server software 404 then transmits an acknowledgement message, via network I/F 306, over data network 210 to MTS 204. In response to the acknowledgement message received by MTS 204, MTS server software deletes the message temporarily stored in temporary storage area 1004 of the subscriber's local VMB 904 and turns on the MWI (such as a flashing light on the subscriber's telephone handset 108).

Operations 1300 are performed during retrieval of messages. Messages are retrieved by a subscriber by contacting VMS 208 and playing these messages back to the subscriber in the conventional manner (S1302). When all new messages are retrieved by a subscriber which has a corresponding VMB on an MTS 204 (indicated by the MT address information data 606 of the subscriber's VMB 504 on VMS 208), messaging server software 404 transmits a message over data network 210 (S1306). Upon receipt of this message, MTS server software turns off the MWI (S1308).

While not illustrated in Figure 2, an MTS 204 and PBX/KS-Br 206 may service more than one enterprise. Accordingly, MTS 204 may be in communication, through data network 210, with more than one VMS 208. This may be desirable where, for example, there are a number of enterprises wishing to distribute the cost of PBX/KS-Br 206 and MTS 204. The system described herein having VMS information 1006 for each VMB 904 could be deployed in this type of situation. To reduce overhead, but also eliminate the feature of having each VMB 904 on MTS 204 store VMS information (which may be different from VMS information stored in another VMB 904 on the same MTS 204), each VMB 904 could retrieve VMS information from a central storage area in data 802 of MTS 204, thus reducing the amount of memory necessary for each VMB 904.

In an alternative embodiment, all greetings may be stored only on VMS 208 rather than on VMS 208 and MTS 204 (for branch subscribers). In such a case, upon hand-off of a caller having received a CFB or CFNA to an MTS 204, the MTS 204 would retrieve a branch subscriber's greeting, in near real time, by requesting and receiving the greeting from VMS 208 via data network 210. Similarly, newly received messages could be transmitted, in near real time, over data network 210 to VMS 208. Accordingly, and in this alternative embodiment, each branch subscriber would require a VMB 904 at MTS 204 to only store VMS information 1006. Thus, the memory requirements of MTS 204 would be substantially reduced. However, the throughput rate and response time of VMS 208 and data network 210 would necessarily have to have an increased capacity.

In a further alternative embodiment, a branch subscriber could retrieve messages directly from MTS 204. In this embodiment MTS 204 would, upon a subscriber's request, retrieve either all or a selected one of the subscriber's messages from VMS 208. The messages requested by MTS 204 would then be transmitted to MTS 204 over data network 210 and, if desired, stored only for the duration of the subscriber's session with MTS 204.

In a further alternative embodiment, VMBs 904 may be further reduced in size by eliminating temporary storage area 1004 which is specifically allocated to an individual subscriber. Rather, temporary storage area 1004 could be allocated as a pool of memory available for all subscribers to an MTS 204. This pooled memory could then be allocated in real time, and as required, to a subscriber whenever an incoming message is received by MTS 204. The allocated memory could, upon transmittal to and storage of the message by VMS 208, be reassigned to the pool for any other subscriber to use.

In a still further alternative embodiment, MTS 204 (Figure 2) could maintain (i.e., not transmit) received messages for subscribers. In this embodiment, subscribers to an MTS 204 would retrieve received messages directly from MTS 204. This embodiment, nevertheless, enables centralized administration of the entire system 200 from HQ 110 while locally servicing subscribers.

While one (or more) embodiment(s) of this invention has been illustrated in the accompanying drawings and described above, it will be evident to those skilled in the art that changes and modifications may be made therein without departing from the essence of this invention. All such modifications or variations are believed to be within the sphere and scope of the invention as defined by the claims appended hereto.

## Claims

1. A voice messaging system comprising:
a voice messaging server in communication with a data network and a telephone switch;
a message taking server also in communication with said data network;
said voice messaging server adapted to:
store greetings of subscribers;
store messages for said subscribers;
transmit said greetings to said message taking server through said data network;
receive messages, from said message taking server transmitted over said data network, said messages intended for said subscribers;
said message taking server adapted to:
receive greetings transmitted over said data network by said voice messaging server;
store said received greetings;
play said stored greetings on demand by callers;
receive from said callers messages intended for said subscribers; and
transmit said messages received from said callers to said voice messaging server over said data network.

2. The voice messaging system of claim 1 wherein for each of said subscribers:
said voice messaging server is further adapted to:
allocate a voice mailbox; and
store address information corresponding to said subscriber's home location; and
said message taking server is further adapted to:
allocate a voice mailbox;
store address information corresponding to said voice messaging server.

3. The voice messaging system of claim 2 wherein said voice messaging server transmits data to said message taking server over said data network using said address information corresponding to said subscriber's home location and said message taking server transmits data to said voice messaging server over said data network using said address information corresponding to said voice messaging server.

4. The voice messaging system of claim 3 wherein said address information corresponding to said subscriber's home location comprises:
an indicator of the physical location of said subscriber's home location; and
a network address of a message taking server at said subscriber's home location.

5. The voice messaging system of claim 4 wherein said address information corresponding to said voice messaging server comprises a network address of said voice messaging server.

6. The voice messaging system of claim 5 wherein said data network is a packet switched network.

7. A method providing voice messaging services, said method comprising:
provisioning a subscriber with a voice mailbox on a voice messaging server;
provisioning said subscriber with a corresponding voice mailbox on a client of said voice messaging server;
storing a greeting for said subscriber in said subscriber's voice mailbox on said voice messaging server;
transmitting said subscriber's greeting to said client over a data network;
receiving and storing at said client said subscriber's greeting in said subscriber's corresponding voice mailbox;
receiving messages for said subscriber at said client;
transmitting said received messages for said subscriber from said client to said voice messaging server over said data network; and
receiving and storing said received messages for said subscriber in said subscriber's voice mailbox at said voice messaging server.

8. The method of claim 7 further comprising deleting said received messages for said subscriber at said client.

9. The method of claim 7 wherein said provisioning said subscriber with a voice mailbox on said voice messaging server comprises:
allocating storage for said greetings and messages of said subscriber; and
storing address information identifying of said client.

10. The method of claim 8 wherein said provisioning said subscriber with a corresponding voice mailbox on a client of said voice messaging server comprises allocating storage for said greetings and messages of said subscriber.

11. The method of claim 8 wherein said provisioning said subscriber with a corresponding voice mailbox on a client of said voice messaging server comprises storing address information identifying said voice messaging server.

12. The method of claim 10 wherein said address information of said client and said voice messaging server each comprise a unique identifier on said data network.

13. The method of claim 12 wherein said data network is an Internet Protocol (IP) network.

14. The method of claim 13 wherein said transmitting of said greetings and received messages is transmitted over said IP network in compliance with Voice Profile for Internet Mail (VPIM) standard.

15. A message taking server (MTS) comprising:
an interface configured for connecting with a data network;
an interface configured for connecting to a telephone switch;
a memory;
a processor adapted to:
receive a voice mail call from said telephone switch in respect of a subscriber;
store in said memory any message received for said subscriber in respect of said voice mail call;
transmit said message along with an identification of said subscriber to said data network addressed to a voice mail server (VMS);
receive an acknowledgement from said VMS of receipt of said message for said subscriber and, in response, delete said message from said memory and set a message wait indicator for said subscriber.

16. The MTS of claim 15 wherein said processor is also adapted to:
receive a recorded greeting along with an identification of said subscriber;
store said greeting in said memory in association with an identification of said subscriber; and
on receipt of a voice mail call from said telephone switch in respect of said subscriber, retrieve and play said greeting.

17. The MTS of claim 16 wherein said identification of said subscriber in memory comprises a voice mail box (VMB) for said subscriber and wherein said VMB also contains a data network address for said VMS and a storage area for said message for said subscriber.

18. The MTS of claim 17 wherein said interface configured to connect to a data network is configured to connect to an Internet Protocol (IP) network.

19. The MTS of claim 18 wherein a message transmitted is transmitted using the Voice Profile for Internet Mail (VPIM) standard.

20. The MTS of claim 17 wherein said interface configured to connect to a telephone switch is configured to connect to a Private Branch Exchange.

21. A voice messaging server (VMS), comprising:
an interface configured for connecting with a data network;
an interface configured for connecting to a telephone switch;
a memory;
a processor adapted to:
receive a voice mail message along with an identification of a subscriber on said data network transmitted from a message taking server (MTS);
store in said memory a message received for said subscriber in respect of said voice mail call;
transmit on said data network an acknowledgement to said MTS on receipt and storage of said message for said subscriber.

22. The VMS of claim 21 wherein said memory has a voice mail box (VMB) for said subscriber and wherein said VMB contains a data network address for said VMS, an indicator of a physical location of said subscriber's home location and a storage area for said message for said subscriber.

23. The VMS of claim 22 wherein said interface configured to connect to a data network is configured to connect to an Internet Protocol (IP) network.

24. The VMS of claim 22 wherein a message received complies with the Voice Profile for Internet Mail (VPIM) standard.

25. The VMS of claim 22 wherein said interface configured to connect to a telephone switch is configured to connect to a Private Branch Exchange.

26. The VMS of claim 22 wherein said processor is also adapted to:
on request of a subscriber, play messages in said subscriber's VMB; and
when all new messages in said subscriber's VMB have been played, transmit on said data network to said data network address in said subscriber's VMB, a message instructing said MTS to reset a message waiting indicator for said subscriber.

27. The VMS of claim 22 wherein said processor is further adapted to:
record and store a greeting of said subscriber in said subscriber's VMB;
transmit on said data network to said data network address in said subscriber's VMB said stored greeting and said identification of said subscriber.

28. A method for providing voice mail services, comprising:
receiving a voice mail call in respect of a subscriber;
storing a message received for said subscriber in respect of said voice mail call;
transmitting said message along with an identification of said subscriber to a data network addressed to a voice mail server (VMS);
receiving an acknowledgement from said VMS of receipt of said message for said subscriber and, in response, deleting said message and setting a message wait indicator for said subscriber.

29. A method for providing voice mail services, comprising:
storing a greeting for a subscriber in a voice mailbox (VMB) provisioned for said subscriber;
transmitting said greeting along with an identification of said subscriber to a data network address of a Message Taker Server (MTS);
receiving a message along with an identification of said subscriber from said data network;
transmitting an acknowledgement from said VMS of receipt of said message for said subscriber on said data network to said MTS.

30. A computer software medium comprising computer code to adapt a computer to:
receive a voice mail message along with an identification of a subscriber from a data network transmitted from a message taking server (MTS);
store in memory of said computer said message received for a subscriber; and
transmit on said data network an acknowledgement to said MTS on receipt and storage of said message for said subscriber.

31. The VMS of claim 30 wherein said computer code further adapts said computer to:
provision a voice mailbox (VMB) for said subscriber and said VMB contains a data network address for said MTS, an indicator of a physical location of said subscriber's home location and a storage area for said message for said subscriber.

32. The VMS of claim 31 wherein said computer code further adapts said computer to:
when all new messages in said subscriber's VMB have been played, transmit on said data network to said data network address in said subscriber's VMB, a message instructing said MTS to reset a message waiting indicator for said subscriber.

33. A computer software medium comprising computer code to adapt a computer to:
receive a voice mail call from a telephone switch in respect of a subscriber, said telephone switch in communication with said computer;
store in memory of said computer any message received for said subscriber in respect of said voice mail call;
transmit said message along with an identification of said subscriber to a data network addressed to a voice mail server (VMS), said computer in communication with said data network; and
receive an acknowledgement from said VMS of receipt of said message for said subscriber and, in response, delete said message from said memory and set a message wait indicator for said subscriber.
